# EUROPÄISCHE PATENTSCHRIFT

(11) **EP 1 356 415 B1**
(45) Veröffentlichungstag und Bekanntmachung des Hinweises auf die Patenterteilung: **28.06.2006**
(21) Anmeldenummer: 01273577.5
(22) Anmeldetag: 14.12.2001
(51) Int. Cl.: G06K 1/05, B23H 9/06, G06K 1/12

(54) **WERKSTÜCK MIT EINEM MASCHINENLESBAREN DATENTRÄGER**
WORK PIECE WITH A MACHINE-READABLE DATA CARRIER
PIECE DOTEE D'UN SUPPORT DE DONNEES LISIBLE PAR UNE MACHINE

(30) Priorität: 30.01.2001 EP 01810084
(43) Veröffentlichungstag der Anmeldung: 29.10.2003
(73) Patentinhaber: Ulrich AG, 9015 St. Gallen (CH)
(72) Erfinder: ULRICH, Christoph, H., CH-9053 Teufen (CH); GIOVANETTONI, Lukas, CH-9500 Wil (CH)
(74) Vertreter: Wenger, René
(86) Internationale Anmeldenummer: PCT/CH2001/000715
(87) Internationale Veröffentlichungsnummer: WO 2002/061665

(56) Entgegenhaltungen:
- WO-A-00/57336
- WO-A-96/03714
- DE-A- 3 019 403
- US-A- 5 637 850
- US-A- 5 706 047
- US-A- 5 971 130
- US-A- 6 004 405
- PATENT ABSTRACTS OF JAPAN Bd. 1999, Nr. 13 30 November 1999 & JP 11 214 299 A (KOMATSU LTD) 06 August 1999

## Beschreibung

Die Erfindung betrifft ein Verfahren zum Anbringen eines maschinenlesbaren Datenträgers an einem chirurgischen Instrument gemäss dem Oberbegriff von Anspruch 1. Damit wird eine Markierung dieses Arbeitswerkzeugs angestrebt, um dessen Einsatz zu überwachen und gegebenenfalls zu steuern.

Insbesondere im medizinischen Bereich weitverbreitete Datenträger sind die sogenannten Barcode, deren Daten mit einem Barcodeleser erfassbar sind. So beschreibt beispielsweise bereits die DE A 39 17 876 ein System zum Beladen eines chirurgischen Instrumentensets, bei dem an jedem Instrument ein Datenträger in der Form eines Barcodes angeordnet ist. Da aufgedruckte Barcodes bei derartigen Instrumenten aus verschiedenen Gründen nicht in Betracht kommen, wird empfohlen, den Barcode mittels eines Laserstrahles in das metallische Material der Instrumente einzugravieren.

Ein grundlegender Nachteil der linear ausgerichteten Barcodes besteht in der limitierten Kapazität der speicherbaren Datenmenge. Ausserdem muss die lineare Ausrichtung beim Scannen berücksichtigt werden, was eine entsprechende Positionierung voraussetzt. In der maschinenlesbaren Datenträgertechnik sind daher bereits verschiedene zweidimensionale Matrixcodes entwickelt worden, deren Speicherkapazität wesentlich grösser ist, wobei die Lage des Codes beim Lesen keine Rolle spielt. Ein derartiger Matrixcode ist beispielsweise in der CH A 679 084 beschrieben. Dieser Code ist auch unter der Bezeichnung "Data Matrix Code" bekannt und eingeführt.
Beispiele zweidimensionaler Matrixcodes sind in der US A 5 637 850 oder in der WO 96/03714 beschrieben. In beiden Fällen wird der maschinenlesbare Datenträger durch die gezielte Ausbildung einer bestimmten Oberflächenstruktur ausgebildet. Dazu werden namentlich elektroerosive oder Laserverfahren angewendet.

Durch die US 5 971 130 ist eine äusserst einfache Version eines Datenträgers bekannt geworden, der aus nebeneinanderliegenden Öffnungen besteht, die durch eine mechanische Tastvorrichtung abgegriffen werden können. Dieses System eignet sich aber nur für grössere Werkstück wie z.B. Stahlbleche oder dergleichen und kann nicht für chirurgische Instrumente eingesetzt werden.

JP 11/214299 beschreibt die Markierung von Halbleiter-Wavern mit Vertiefungen.

Ein erhebliches Problem beim Anbringen von Datenträgern mittels Laserstrahlen oder Elektroerosion besteht darin, dass die dabei ausgelösten molekularen Strukturveränderungen in einer Metalllegierung zu einer späteren Rostbildung führen kann. Ausserdem ist die Oberflächentiefe der Markierung derart klein, dass durch mechanische Einwirkungen mit der Zeit Beschädigungen eintreten können, welche zu Lesefehlern führen. Es ist daher eine Aufgabe der Erfindung, ein Verfahren der eingangs genannten Art zu schaffen, das auf kleinstem Raum die Anbringung eines leicht lesbaren Datenträgers derart erlaubt, dass dieser dauerhaft und ohne schädigende Einwirkung auf den Werkstoff auf dem Arbeitswerkzeug verbleibt. Diese Aufgabe wird erfindungsgemäss mit einem Verfahren mit den Merkmalen von Anspruch 1 gelöst, der gegen US 5,637,850 abgegrenzt wurde.

Die Erfindung nutzt auf überraschend einfache Weise die Tatsache aus, dass bei einem zweidimensionalen Matrixcode die Art der Kontrastbildung auf den einzelnen Matrixpunkten keine Rolle spielt und dass selbst bei relativ geringer Kontraststärke noch eine Lesbarkeit gewährleistet ist. Die Vertiefungen bewirken somit ebenfalls eine genügende Kontrastwirkung, weil sie sich im Auflicht ausreichend von den ebenen Flächen des Datenabschnitts unterscheiden. Die Vertiefungen bleiben auch bei starker mechanischer Beanspruchung wie z. B. gegenseitiges Aneinanderreiben der Instrumente, völlig intakt und sie sind bakteriologisch problemlos. Eine Beeinträchtigung der Oberflächenstruktur wie bei der hohen thermischen Belastung durch Lasermarkierung oder Elektroerosion findet beim Bohren nicht statt.

Die Vertiefungen werden rotationssymmetrisch mit einem sich im Querschnitt gegen den Grund der Vertiefungen verjüngenden, vorzugsweisen kegeligen Abschnitt gebohrt. Die Kegelfläche bewirkt eine ausgezeichnete Köntrastwirkung bei der optischen Detektion, bzw. bei der Beleuchtung im Auflicht. Die eintreffenden Lichtstrahlen werden ersichtlicherweise durch die Kegelflächen anders reflektiert, als an der Planfläche, wodurch die Vertiefungen als dunkle Kreise erscheinen.

Beim Anbringen der Vertiefungen spielt selbstverständlich der Werkstoff des Werkstücks eine erhebliche Rolle. Chirurgische Instrumente sind normalerweise aus rostfreiem Stahl gefertigt. Aber auch Arbeitswerkzeuge aus Leichtmetall, Buntmetall, Keramik oder Kunststoff lassen sich mit dem erfindungsgemässen Verfahren bearbeiten. Der Ausdruck "Werkstück" umfasst im übrigen nicht nur Arbeitswerkzeuge im eigentlichen Wortsinn wie z. B. Scheren, Skalpelle, usw., sondern auch andere markierfähige Teile wie z. B. bestimmte Implantate usw.

Als besonders vorteilhaft hat sich die Anbringung der Vertiefungen durch Bohren erwiesen, weil sich Bohrungen hochpräzise mit einem rechnergesteuerten Koordinatenbohrwerk anbringen lassen.

Der Datenabschnitt wird vor dem Anbringen der Vertiefungen als Planfläche am chirurgischen Instrument angebracht. Eine derartige Planfläche bildet eine Referenzebene mit gleichen Bedingungen für sämtliche Vertiefungen, unabhängig von der Beschaffenheit der übrigen Werkstückoberfläche. Die Planfläche kann beispielsweise durch Fräsen oder Schleifen angebracht werden. Wenn die Planfläche gegenüber der benachbarten Werkstückoberfläche zurückversetzt ist, bewirkt dies einen weiteren Schutz des Datenträgers vor mechanischen Einwirkungen. Ausserdem ist dadurch besser erkennbar, wo sich der Datenabschnitt überhaupt befindet, wodurch das Einlesen erleichtert wird.

Ein hoher Grad an Betriebssicherheit wird schliesslich dadurch erreicht, dass zusätzlich zum Matrixcode ein alphanumerischer Code am chirurgischen Instrument angebracht wird. Dieser erlaubt eine visuelle Identifikation des Werkstückes auch dann, wenn ein Lesegerät nicht zur Verfügung steht, oder wenn die Maschinenlesbarkeit aus anderen Gründen nicht möglich ist.

Zum Anbringen der Vertiefungen wird das Werkstück vorteilhaft in einer Spannvorrichtung eingespannt, um dann zuerst den Datenabschnitt als Planfläche aus dem Werkstück herauszufräsen. Anschliessend werden die Vertiefungen mit einem rechnergesteuerten Koordinatenbohrwerk gebohrt. Die Prüfung des Matrixcodes erfolgt im eingespannten Zustand des Werkstücks mit einem Lesegerät, wobei gegebenenfalls bei einem nicht identifizierbaren Code das Fräsen der Planfläche, das Bohren der Vertiefungen und die Prüfung wiederholt werden müssen.

Die Erfindung betrifft auch ein chirurgisches Instrument mit einem maschinenlesbaren Datenträger, das die Merkmale im Anspruch 5 aufweist.

Die Vertiefungen sind rotationssymmetrisch ausgebildet, was sich beim Bohren automatisch ergibt. Es ist ausserdem erforderlich, dass die Vertiefungen im Querschnitt einen sich gegen den Grund verjüngenden, vorzugsweise einen kegelstumpfförmigen oder kegelförmigen Abschnitt aufweisen. Die ringförmige Kegelmantelfläche erhöht je nach Lichteinfall die Kontrastwirkung. Der sich verjüngende Abschnitt kann dabei einen Öffnungswinkel von beispielsweise 80° bis 120° aufweisen.

Je nach Auflösungsgrad des Lesegeräts und der eingesetzten Arbeitstechnik sind der Minituarisierung des Matrixcodes kaum Grenzen gesetzt. Eine optimale Datendichte kann jedoch erreicht werden, wenn die Vertiefungen in der Ebene des Datenabschnitts einen Durchmesser von weniger als 0,15 mm und einen Abstand zwischen den Zentren von weniger als 0,2 mm aufweisen. Der Matrixcode kann sich auf den beiden Achsen auf einer quadratischen oder auf einer rechteckigen Fläche erstrecken. Die Distanz zwischen dem Grund der Vertiefungen und der Ebene des Datenabschnitts, also die eigentliche Bohrtiefe, beträgt vorteilhaft weniger als 0,05 mm. Eine optimale Kontrastwirkung ist dabei gewährleistet, ohne dass die Reinigung der Vertiefungen problematisch wäre.

Die gegenüber der benachbarten Werkstückoberfläche zurückversetzte Planfläche kann ebenfalls unterschiedliche Konfigurationen aufweisen. Der Grundriss kann kreisförmig oder oval sein, was sich beim Fräsen ohnehin ergibt.

Ein erfindungsgemäss hergestellter Datenträger auf einem Werkstück wird besonders vorteilhaft durch ein Verfahren gelesen, bei dem der Lesekopf einer Kamera mit seiner optischen Achse gegen den Datenträger bzw. gegen die Planfläche gerichtet wird, wobei die Beleuchtung über das Objektiv des Lesekopfs erfolgt.

Das Lesegerät zum Einlesen eines erfindungsgemässen Datenträgers ist vorteilhaft gekennzeichnet durch einen Lesekopf mit einer in die optische Achse integrierten, zentralen Beleuchtung. Damit wird an den Kegelmantelflächen der Vertiefungen ein anderer Abstrahlwinkel erreicht, was von der Kamera als ringförmiger Kontrast registriert wird. Je nach Art der Vertiefung wäre es aber auch denkbar, dass die optische Achse von einer ringförmigen Beleuchtung umgeben ist.

Ein erfindungsgemäss markiertes Werkstück eignet sich besonders vorteilhaft zur Verwendung in einem Verfahren zum Überwachen von von chirurgischen Instrumenten. Ein derartiges Verfahren ermöglicht im medizinischen Bereich eine Vielzahl verschiedener Funktionen und Eigenschaften. Arbeitsabläufe werden dadurch vereinfacht und ein optimales Qualitätsmanagement ist gewährleistet. Auch betriebswirtschaftliche Daten können mit dem Matrixcode ständig überwacht und abgefragt werden. Ein gattungsmässig vergleichbares Verfahren ist beispielsweise durch die WO 00/57336 bekannt geworden. Allerdings erfolgt dort die Markierung ebenfalls durch Laserstrahlen, Ätzen oder oberflächlich durch ein Tintenstrahlverfahren. Derart markierte Spitalinstrumente unterliegen beispielsweise beim Sterilisieren enormen Belastungen, sodass die Datenträger relativ schnell abgenutzt werden bzw. dass im Laufe der Zeit immer häufiger Lesefehler auftreten.

Typische Arbeitsabläufe im Spitalbereich sind beispielsweise das Erstellen und Prüfen sogenannter Siebpläne für das Sterilisieren ganzer Instrumentensets, wie z. B. in der eingangs erwähnten DE A 39 17 876 beschrieben. Auch der Sterilisiervorgang selbst lässt sich über den Matrixcode steuern, indem beispielsweise eine zulässige Sterilisationstemperatur oder Sterilisationsdauer automatisch ausgewählt wird. Ein weiterer Arbeitsablauf ist das Bereitstellen der Instrumente zur Neuaufbereitung und/oder Reparatur. So kann beispielsweise ein bestimmtes Instrument, beispielsweise ein Meissel, nach einer bestimmten Anzahl Einsätze zum Nachschleifen identifiziert und ausgeschieden werden, wobei alle für die Neuaufbereitung relevanten Daten als Protokoll ausgedruckt werden können.

Im Bereich Qualitätsmanagement können ebenfalls unterschiedliche Überwachungsaufgaben ausgeführt werden, insbesondere die lückenlose Rückverfolgbarkeit sämtlicher Arbeitsabläufe, die Überwachung der Verfalldaten nach erfolgter Sterilisation, die Anzahl der Sterilisationen pro Instrument und vieles mehr.

Im Bereich der betriebswirtschaftlichen Daten können beispielsweise die Kosten oder der Inventarwert eines Instruments überwacht werden. Auch die zukünftigen Kosten oder die mögliche Neuanschaffung lassen sich budgetieren.

Weitere Vorteile und Einzelmerkmale der Erfindung ergeben sich aus der nachfolgenden Beschreibung von Ausführungsbeispielen und aus den Zeichnungen. Es zeigen:
- Figur 1: Ein stark schematisierter Arbeitsablauf beim Anbringen eines Datenträgers,
- Figur 2: eine stark vergrösserte Draufsicht auf einen Datenträger an einem chirurgischen Instrument,
- Figur 3: eine nochmals vergrösserte Darstellung des Datenträgers gemäss Figur 2,
- Figur 4: ein Querschnitt durch den Datenträger gemäss Figur 3,
- Figur 5: das Detail A gemäss Figur 4 in stark vergrösserter Darstellung,
- Figur 6: eine perspektivische Darstellung eines Lesekopfs,
- Figur 7: eine durch eine digitale Kamera erzeugte Abbildung eines Datenträgers,
- Figur 8: ein den Benutzungskreislauf chirurgischer Instrumente darstellendes Diagramm und
- Figur 9: ein die Datenerfassung an chirurgischen Instrumenten darstellendes Diagramm.

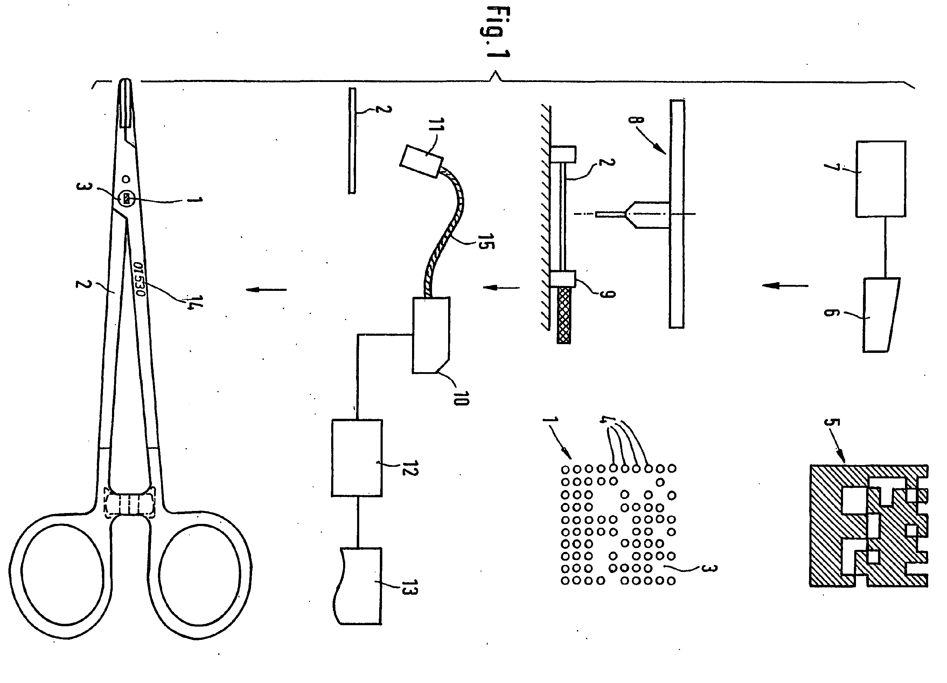

Wie in Figur 1 dargestellt, wird zum Anbringen eines maschinenlesbaren Datenträgers beispielsweise an einem chirurgischen Instrument 2 wie folgt vorgegangen:

Nach der Definition der abzuspeichernden Daten, werden diese als alphanumerischer Code an der Eingabekonsole 6 eines Matrixrechners 7 eingegeben. Der Matrixrechner bestimmt auf hier nicht näher dargestellte Art und Weise den Matrixcode 5, bestehend aus hellen und dunkeln Feldern auf der Matrix.

Dieser Binärcode wird zur Ansteuerung eines Koordinatenbohrwerks 8 benutzt, an dem das Arbeitswerkzeug 2 in einer Spannvorrichtung 9 fest eingespannt ist. Entsprechend dem Matrixcode 5 werden Bohrungen 4 angebracht, welche insgesamt den Datenträger 1 bilden. Wie die Gegenüberstellung zeigt, existiert für jedes dunkle Feld des Matrixcodes eine Bohrung 4, welche gegenüber der Oberfläche des Datenabschnitts 3 die gleiche Kontrastwirkung entfaltet, wie eine Färbung der Oberfläche.

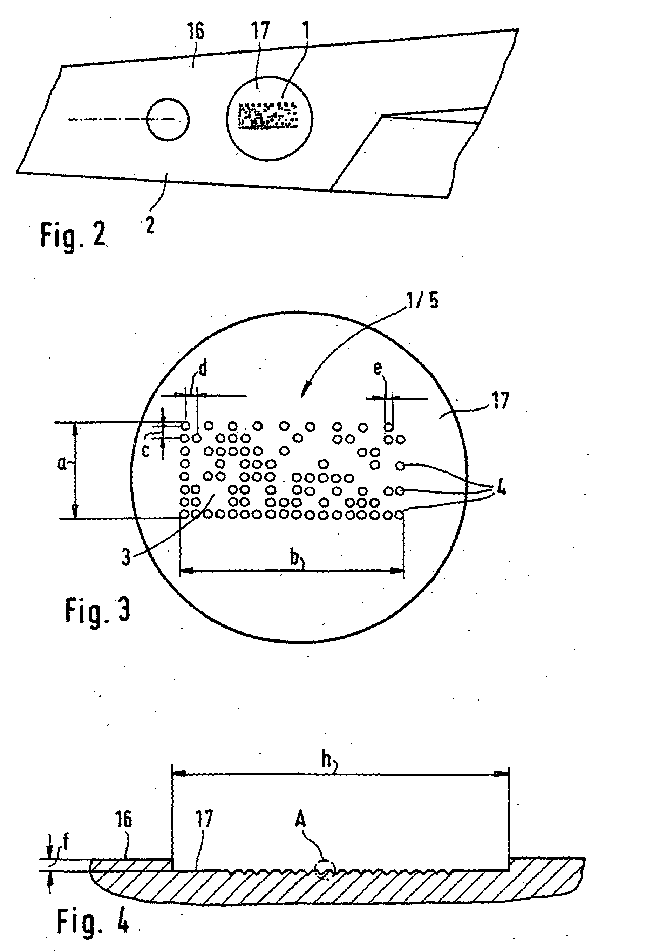

Vor dem Anbringen der Bohrungen wird der Datenabschnitt 3 als plane Referenzfläche 17 (Figur 2) aus dem Arbeitswerkzeug 2 herausgefräst. Dieser Vorgang kann ebenfalls im Bohrwerk 8 oder auch in einem separaten Arbeitsgang an einer anderen Maschine erfolgen. Damit wird sichergestellt, dass der Matrixcode stets auf einer planen Oberfläche angebracht ist, um Lesefehler zu vermeiden.

Bevor das Arbeitswerkzeug 2 aus der Spannvorrichtung 9 entfernt wird, erfolgt das Einlesen des Matrixcodes mit einem Lesegerät 10, das auf an sich bekannte Weise über eine flexible Datenleitung 15 mit einem Lesekopf 11 verbunden ist. Das Lesegerät 10 ist mit einer Datenverarbeitungsanlage 12 verbunden, in welcher die verschiedenen Matrixcodes gespeichert sind. Bei erfolgreichem Lesevorgang, d. h. beim Erkennen des Codes werden die gespeicherten Daten für das betreffende Arbeitswerkzeug beispielsweise ergänzt durch das aktuelle Tagesdatum für die Herstellung des Datenträgers, wonach ein Protokoll 13 ausgedruckt werden kann. Gelingt die Identifikation des Codes nicht, müssen gegebenenfalls das Fräsen der Planfläche und der Bohrvorgang wiederholt werden.

Das fertiggestellte chirurgische Instrument 2 ist in Figur 1 etwa im Originalmassstab dargestellt. Der Datenträger 1 kann ersichtlicherweise auf kleinstem Raum untergebracht werden. Vorzugsweise wird zusätzlich zum Matrixcode auch noch ein alphanumerischer Code 14 eingraviert oder auf andere Weise angebracht. Die Identifikation des Arbeitswerkzeugs ist damit nicht ausschliesslich vom Lesegerät abhängig.

Die Figuren 2 bis 5 zeigen weitere Einzelheiten des erfindungsgemässen Datenträgers. Die bereits erwähnte Planfläche 17 wird beispielsweise als kreisförmige Einfräsung in der Werkzeugoberfläche 16 angebracht. Die Einfrästiefe f, d. h. die Distanz zwischen der Werkzeugoberfläche 16 und der Planfläche 17 ist dabei sehr gering und beträgt beispielsweise lediglich 0,1 bis 0,2 mm. Ist die Werkzeugoberfläche 16 beispielsweise konvex oder konkav gewölbt, kann die Planfläche 17 an einzelnen Stellen annähernd mit der Werkzeugoberfläche 16 zusammenfallen. Der Durchmesser h der Einfräsung beträgt beispielsweise 4 mm.

Figur 3 zeigt massliche Einzelheiten des hier rechteckig ausgebildeten Datenträgers 1. Höhe a und Breite b entsprechen etwa dem Verhältnis 1:2, wobei jeweils der äusserste Matrixschenkel in jeder Richtung durchgehend gebohrt ist. Dies ist für die lagemässige Erkennung des Matrixcodes wichtig. Die einzelnen Bohrungen 4 haben in der Ebene der Planfläche 17 einen Durchmesser e von beispielsweise 0,1 mm, während der Abstand c und d zwischen den Zentren ca. 0,15 mm beträgt.

Das Anbringen feinster Bohrungen auf engem Raum wird technisch ohne weiteres beherrscht. Vergleichbare Bearbeitungsverfahren sind beispielsweise in der Uhrenindustrie bekannt.

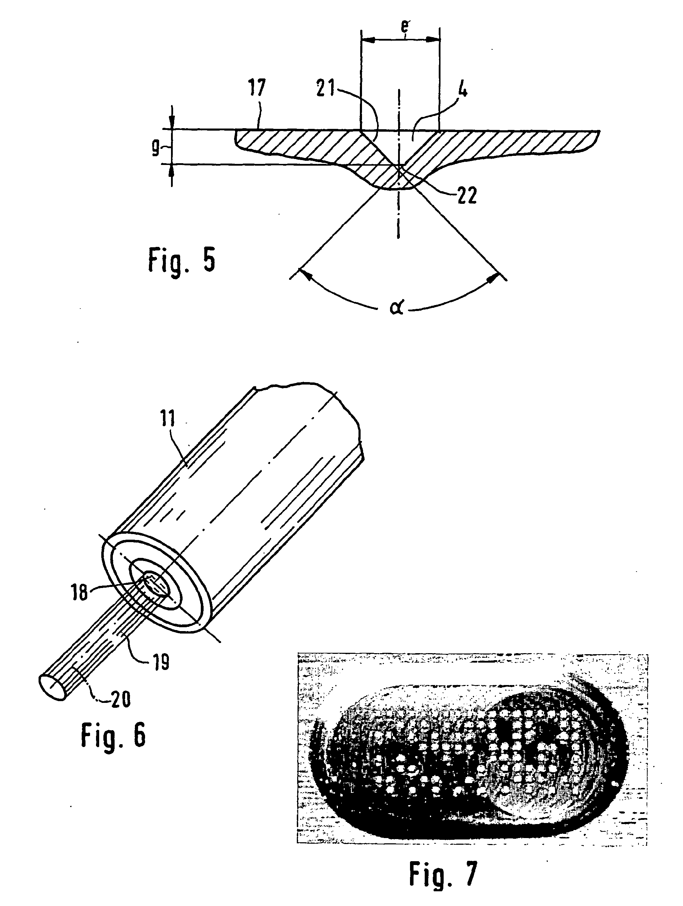

Figur 5 zeigt schliesslich noch eine Bohrung bzw. eine Vertiefung 4 in einem stark vergrösserten Querschnitt. Die Bohrtiefe g, d. h. die Distanz zwischen der Planfläche 17 und dem Grund 22 des Bohrlochs ist äusserst gering und beträgt beispielsweise 0,04 mm bis 0,05 mm. Es hat sich gezeigt, dass im Hinblick auf die Kontrastwirkung mit einem kegeligen Bohrloch die besten Resultate erzielt werden können. Die kegelförmige Mantelfläche 21 hat dabei einen Öffnungswinkel α von beispielsweise 90° oder auch mehr als 90°. Ausserdem schneidet die Mantelfläche 21 die Planfläche 17. An der Mantelfläche 21 wird einfallendes Licht in einem anderen Winkel reflektiert als an der Planfläche 17, bzw. als am Bohrgrund 22 was zu einer besonders vorteilhaften Kontrastwirkung führt. Dieser Effekt wird verstärkt durch eine möglichst in der optischen Achse der Kamera verlaufende Beleuchtung.

Ein gemäss Figur 6 stark vergrösserter Lesekopf 11 hat stirnseitig auf der optischen Achse 20 ein Objektiv 18. Für eine optimale Ausleuchtung ist es zweckmässig, wenn der Lichtstrahl 19 der Beleuchtung durch das Objektiv fällt. Das Licht kann zu diesem Zweck in die optische Achse gespiegelt werden. Der Lichtstrahl der Beleuchtung kann ein permanenter Lichtstrahl sein. Unter bestimmten Bedingungen, insbesondere im Hinblick auf die Digitalisierung des Bildes und auf die verwendete Kamera, kann es aber auch zweckmässig sein, mit Stroboskoplicht zu beleuchten.

Figur 7 zeigt eine durch eine digitale Kamera erzeugte Abbildung eines Datenträgers in stark vergrösserter Darstellung. Die vertiefte Planfläche ist dabei oval ausgebildet und hat eine Länge von 4 mm bzw. eine Breite von 2 mm. In der hellen Planfläche sind die kegelförmigen Bohrungen deutlich als dunkle Ringe erkennbar. Die leichten Unregelmässigkeiten am Aussenumfang werden durch mikroskopisch kleine Materialausbrüche im Bohrbereich verursacht. Die Kontrastwirkung reicht jedoch vollständig für ein sofortiges Erkennen des Matrixcodes durch eine geeignete Kamera.

Nachstehend werden ein paar typische Einsatzmöglichkeiten des erfindungsgemässen Datenträgers am Beispiel von chirurgischen Instrumenten erläutert. Das Ziel besteht dabei im Aufbau eines möglichst vollständigen Informationssystems betreffend sämtliche Vorgänge, welche diese Instrumente betreffen. Selbstverständlich sind vergleichbare Informationssysteme in anderen Bereichen jedoch ohne weiteres denkbar. So könnten beispielsweise in einem Fabrikationsbetrieb Handwerkzeuge und Maschinenwerkzeuge gekennzeichnet und erfasst werden.

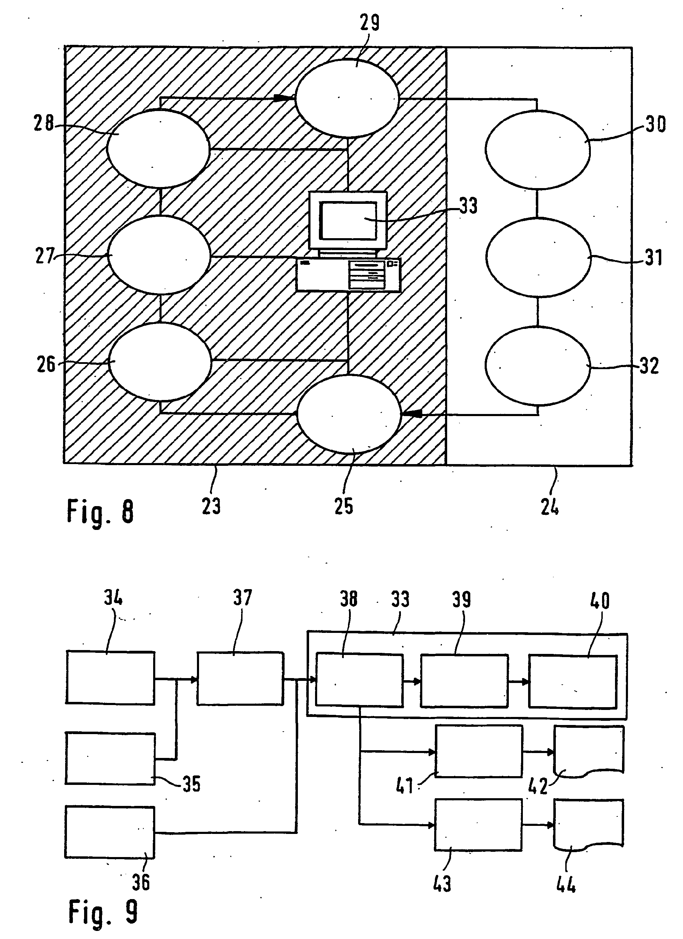

In Figur 8 ist ein typischer Instrumentenkreislauf in einem Spital dargestellt, wobei das schraffierte Feld 23 den eigentlichen Einsatzbereich und das Feld 24 den Retablierungsbereich symbolisiert. Im Zentrum der verschiedenen Benutzungshandlungen steht eine Datenverarbeitungsanlage 33, welche durch Einlesen des Matrixcodes an verschiedenen Arbeitsstationen mit neuen Daten versehen wird. Nach einer Funktionskontrolle 25 der Instrumente werden diese für das Siebpacken 26 freigegeben. Nicht funktionstüchtige Instrumente werden ausgeschieden und der Neuaufbereitung zugeführt (siehe Figur 10). Das setartige Packen der Siebkörbe vor der Sterilisation ist ein wichtiger Vorgang, weil dabei bereits die richtige Packreihenfolge und Zusammenstellung des Siebes mit den einzelnen Instrumenten festgelegt wird. Bereits beim Siebpacken können Kontrollfunktionen mit Hilfe der Datenträger ausgeübt werden, indem im Rechner bestimmte Siebzusammenstellungen vorprogrammiert werden. Fehlt ein Instrument oder wird dem Sieb ein falsches Instrument zugefügt, erfolgt eine entsprechende Anzeige über die Datenverarbeitungseinrichtung.

Die nachfolgende Sterilisation 27 erzeugt ebenfalls bestimmte Betriebsdaten bezüglich Sterilisationsprozess, Dauer, Temperatur, Druck, usw., welche wiederum als ergänzende Daten dem Rechner 33 zugeführt werden können. Umgekehrt ist auch eine Steuerung der Sterilisation über den Rechner 33 in Abhängigkeit der dem Sterilisationsprozess zugeführten Instrumente denkbar.

Die Verschiebung 28 der Instrumente generiert Daten über den Aufenthaltsort der sterilisierten Instrumente und damit über die aktuelle Verfügbarkeit. Schliesslich sind auch die Daten über den Gebrauch 29 der Instrumente von grösster Wichtigkeit für die Rückverfolgung, wobei z. B. genau erfasst werden kann, welches Instrument zu welchem Zeitpunkt an welchem Patienten bei welchem Eingriff eingesetzt wurde.

Im Retablierungsbereich 24 erfolgt zuerst eine Rückführung 30 der Instrumente, der gegebenenfalls eine Dekontamination vorausgeht. Anschliessend erfolgt das Waschen 31 und gegebenenfalls eine vom Typ des Instruments abhängige Pflege 32, bevor der Kreislauf wieder beginnt.

In Figur 9 ist dargestellt, welche wichtigen Daten im Matrixcode enthalten sind und welche Daten in der Datenverarbeitungseinrichtung 33 archiviert und protokolliert werden. Unter den verschiedenen Stammdaten stehen die artikelbezogenen Stammdaten 34 im Vordergrund, welche das Instrument individualisieren. Die klinikbezogenen Stammdaten 35 identifizieren den Standort und/oder den Eigentümer der Instrumente. Die personenbezogenen Stammdaten 36 individualisieren beispielsweise den Arzt, der die Instrumente gebraucht. Wichtig sind schliesslich auch noch die Stammdaten zu den Siebplänen 37, d.h. die Informationen über die Bestückung der Siebe mit den verschiedenen Instrumenten. Derartige Siebpläne müssen vor der Implementierung des Informationssystems im Spital erstellt werden.

Das Zuweisen der Siebinhalte und das Verschieben der Instrumente bildet einen Informationsblock 38, der am Anfang des Kreislaufs gemäss Figur 8 steht. Nicht mehr einsetzbare Instrumente werden zu einer Neuaufbereitung 41 bereitgestellt, wobei ein Reparaturformular 42 ausgedruckt werden kann. Auch der Auftrag 43 für die Neuaufbereitung zusammen mit dem Bestellformular 44 kann über die Datenverarbeitungseinrichtung generiert werden.

Die einsetzbaren Instrumente gelangen anschliessend zum Siebpakken, wobei ein Datenblock 39 dokumentiert wird. Ebenso wird die Zuweisung des Siebs an den gewünschten Standort als Datenblock 40 aufgenommen.

Zwischen dem Benutzer des Arbeitswerkzeugs, also z.B. dem Spital und dem Hersteller, kann auf besonders vorteilhafte Weise ein Datenaustausch erfolgen, um die Neuaufbereitung der Instrumente zu bewirtschaften. Der Hersteller des Instruments verfügt über alle artikelbezogenen Stammdaten bzw. über alle Daten, welche die bisherigen Einsätze des Instruments, dessen Alter usw. betreffen. Wird vom Spital eine Neuaufbereitung verlangt (Pos. 43 und 44 Figur 8), kann sich der Hersteller bei den betriebsinternen Abläufen auf die vorhandenen bzw. auf die ihm übermittelten Datensätze abstützen. Diese Datensätze werden um die Parameter der Neuaufbereitung ergänzt.

## Patentansprüche

1. Verfahren zum Anbringen eines durch optische Detektion maschinenlesbaren Datenträgers (1) an einem chirurgischen Instrument (2),
wobei in einem Datenabschnitt (3) einzelne Vertiefungen (4) angeordnet werden, welche insgesamt einen zweidimensionalen Matrixcode bilden,
**dadurch gekennzeichnet,**
**dass** die Vertiefungen derart rotationssymmetrisch durch Bohren herausgearbeitet werden, dass sie einen sich im Querschnitt gegen den Grund (22) der Vertiefung verjüngenden Abschnitt aufweisen
und **dass** der Datenabschnitt (3) vor dem Anbringen der Vertiefungen (4) als gegenüber der benachbarten Werkstückoberfläche zurückversetzte Planfläche (17) am chirurgischen Instrument (2) angebracht wird.

2. Verfahren nach Anspruch 1, **dadurch gekennzeichnet, dass** die Vertiefungen einen kegelstumpfförmigen oder kegelförmigen Abschnitt aufweisen.

3. Verfahren nach Anspruch 1 oder 2, **dadurch gekennzeichnet, dass** zusätzlich zum Matrixcode ein alphanumerischer Code (14) am Werkstück angebracht wird.

4. Verfahren nach einem der Ansprüche 1 bis 3, **dadurch gekennzeichnet**,
a) dass das chirurgische Instrument (2) in einer Spannvorrichtung (9) eingespannt wird,
b) dass zuerst der Datenabschnitt als Planfläche (17) aus dem chirurgischen Instrument herausgefräst wird,
c) dass anschliessend die Vertiefungen (4) mit einem rechnergesteuerten Koordinatenbohrwerk (8) gebohrt werden,
d) dass der Matrixcode im eingespannten Zustand des Werkstücks mit einem Lesegerät (10) geprüft wird,
e) und dass bei nicht identifizierbarem Code die Arbeitsschritte b, c und d wiederholt werden.

5. Chirurgisches Instrument,
mit einem durch optische Detektion maschinenlesbaren Datenträger (1), der als zweidimensionaler Matrixcode (5) in der Form einzelner Vertiefungen (4) in einem Datenabschnitt (3) ausgebildet ist,
**dadurch gekennzeichnet,**
**dass** die Vertiefungen in einer gegenüber der benachbarten Werkstückoberfläche zurückversetzten Planfläche (17) durch Bohren rotationssymmetrisch herausgearbeitet sind und im Querschnitt einen sich gegen den Grund (22) der Vertiefungen verjüngenden Abschnitt (21) aufweisen.

6. Chirurgisches Instrument nach Anspruch 5, **dadurch gekennzeichnet, dass** die Vertiefungen einen kegelstumpfförmigen oder kegelförmigen Abschnitt aufweisen.

7. Chirurgisches Instrument nach Anspruch 5 oder 6, **dadurch gekennzeichnet, dass** der sich verjüngende Abschnitt (21) die Planfläche (17) schneidet.

8. Chirurgisches Instrument nach einem der Ansprüche 5 bis 7, **dadurch gekennzeichnet, dass** der sich verjüngende Abschnitt (21) einen Kegelwinkel (α) von 80° bis 120° aufweist.

9. Chirurgisches Instrument nach einem der Ansprüche 5 bis 8, **dadurch gekennzeichnet, dass** die Vertiefungen (4) in der Ebene der Planfläche (17) einen Durchmesser (e) von weniger als 0,15 mm und einen Abstand (c, d) zwischen den Zentren von weniger als 0,2 mm aufweisen.

10. Chirurgisches Instrument nach einem der Ansprüche 5 bis 9, **dadurch gekennzeichnet, dass** die Distanz (g) zwischen dem Grund (22) der Vertiefung und der Ebene der Planfläche (17) weniger als 0,05 mm beträgt.

11. Verfahren zum Lesen eines durch optische Detektion maschinenlesbaren Datenträgers auf einem chirurgischen Instrument der als zweidimensionaler Matrixcode (5) in der Form einzelner Vertiefungen (4) in einem Datenabschnitt (3) ausgebildet ist, hergestellt nach einem Verfahren gemäss einem der Ansprüche 1 bis 4, **dadurch gekennzeichnet, dass** der Lesekopf einer Kamera mit seiner optischen Achse gegen den Datenträger (1) bzw. gegen die Planfläche (17) gerichtet wird, wobei die Beleuchtung durch einen Lichtstrahl über das Objektiv des Lesekopfs in der optischen Achse erfolgt.

12. Verwendung von chirurgischen Instrumenten mit je einem durch optische Detektion maschinenlesbaren Datenträger der als zweidimensionaler Matrixcode (5) in der Form einzelner Vertiefungen (4) in einem Datenabschnitt (3) ausgebildet ist, hergestellt nach einem Verfahren gemäss einem der Ansprüche 1 bis 4, in einem Überwachungsverfahren, bei dem jedem Instrument ein für ihn einmaliger Datenträger zugeordnet wird, der für das Instrument kennzeichnende Stammdaten enthält,
- wobei die Stammdaten in einer Datenverarbeitungseinrichtung (33) erfasst werden,
- bei jedem Gebrauch des Instruments der Datenträger eingelesen und die dabei erfassten Stammdaten mit gebrauchsspezifischen Daten ergänzt, wiederum als Ist-Daten in der Datenverarbeitungseinrichtung gemeinsam gespeichert werden,
- die Datenverarbeitungseinrichtung die gespeicherten Ist-Daten mit ebenfalls gespeicherten Soll-Daten vergleicht,
- und aufgrund vorbestimmter Parameter eine Anzeige über den Zustand des chirurgischen Instruments erzeugt.

## Claims

1. Method for putting a data carrier (1) on a surgical instrument (2), said data carrier (1) being machine-readable by optical detection, where a data section (3) contains individual depressions (4) which form a total of one two-dimensional matrix code, **characterized in that** the depressions are worked in a rotationally symmetrical form by drilling, in such a way that they have a section whose cross section tapers towards the base (22) of the depression, and **in that** the data section (3) is put on the surgical instrument (2) as a planar surface (17) which is set back from the adjacent workpiece surface before the depressions (4) are made.

2. Method according to Claim 1, **characterized in that** the depressions have a frustoconical or conical section.

3. Method according to Claim 1 or 2, **characterized in that**, in addition to the matrix code, an alphanumeric code (14) is put on the workpiece.

4. Method according to one of Claims 1 to 3, **characterized**
a) in that the surgical instrument (2) is clamped in a clamping apparatus (9),
b) in that the data section is first milled out of the surgical instrument as a planar surface (17),
c) in that the depressions (4) are then drilled using a computer-controlled coordinate drill (8),
d) in that the matrix code is checked using a reader (10) while the workpiece is in the clamped state,
e) and in that work steps b, c and d are repeated if the code cannot be identified.

5. Surgical instrument, with a data carrier (1) which is machine-readable by optical detection and which is designed as a two-dimensional matrix code (5) in the form of individual depressions (4) in a data section (3), **characterized in that** the depressions are made in a rotationally symmetrical form by drilling in a planar surface (17) which is set back from the adjacent workpiece surface, and they have a section (21) whose cross section tapers towards the base (22) of the depressions.

6. Surgical instrument according to Claim 5, **characterized in that** the depressions have a frustoconical or conical section.

7. Surgical instrument according to Claim 5 or 6, **characterized in that** the tapering section (21) intersects the planar surface (17).

8. Surgical instrument according to one of Claims 5 to 7, **characterized in that** the tapering section (21) has a cone angle (α) of between 80° and 120°.

9. Surgical instrument according to one of Claims 5 to 8, **characterized in that** the depressions (4) at the level of the planar surface (17) have a diameter (e) of less than 0.15 mm and a spacing (c, d) between the centres of less than 0.2 mm.

10. Surgical instrument according to one of Claims 5 to 9, **characterized in that** the distance (g) between the base (22) of the depression and the level of the planar surface (17) is less than 0.05 mm.

11. Method for reading a data carrier which is machine-readable by optical detection on a surgical instrument and which is designed as a two-dimensional matrix code (5) in the form of individual depressions (4) in a data section (3), and produced by a method according to one of Claims 1 to 4, **characterized in that** the optical axis of a camera's read head is directed towards the data carrier (1) or towards the planar surface (17), the illumination being provided in the optical axis by a light beam via the read head's lens.

12. Use of surgical instruments that each have a data carrier which is machine-readable by optical detection and which is designed as a two-dimensional matrix code (5) in the form of individual depressions (4) in a data section (3), and produced by a method according to one of Claims 1 to 4, in a monitoring process in which each instrument is allocated a unique data carrier which contains master data identifying the instrument,
- where the master data are recorded in a data processing device (33),
- whenever the instrument is used, the data carrier is read in and the master data recorded in the process, complemented with use-specific data, are in turn stored together as actual data in the data processing device,
- the data processing device compares the stored actual data with nominal data which are likewise stored,
- and predetermined parameters are taken as a basis for producing a display relating to the state of the surgical instrument.

## Revendications

1. Procédé pour installer sur un instrument chirurgical (2) un support de données (1) lisible par machine grâce à une détection optique, selon lequel on dispose dans une zone de données (3) des creux individuels (4) qui forment dans leur ensemble un code à matrice à deux dimensions, **caractérisé en ce que** les creux sont réalisés avec une symétrie de révolution, par perçage, de manière à présenter une partie qui va en diminuant vers le fond (22) du creux, en coupe transversale, et **en ce que** la zone de données (3) est installée sur l'instrument chirurgical (2) avant la réalisation des creux (4), sous la forme d'une surface plane (17) en retrait par rapport à la surface de pièce voisine.

2. Procédé selon la revendication 1, **caractérisé en ce que** les creux présentent une partie tronconique ou conique.

3. Procédé selon la revendication 1 ou 2, **caractérisé en ce qu'**il est prévu sur la pièce, en plus du code à matrice, un code alphanumérique (14).

4. Procédé selon l'une des revendications 1 à 3, **caractérisé**
a) en ce que l'instrument chirurgical (2) est fixé dans un dispositif de serrage (9),
b) en ce que la zone de données est tout d'abord fraisée sous la forme d'une surface plane (17) dans l'instrument chirurgical,
c) en ce que les creux (4) sont ensuite réalisés par perçage à l'aide d'une aléseuse à coordonnées (8) commandée par ordinateur,
d) en ce que le code à matrice est contrôlé à l'aide d'un lecteur (10) alors que la pièce est fixée,
e) et en ce que si le code n'est pas identifiable, les phases b, c et d sont reprises.

5. Instrument chirurgical avec un support de données (1) qui est lisible par machine grâce à une détection optique et qui est conçu comme un code à matrice à deux dimensions (5) sous la forme de creux individuels (4) dans une zone de données (3), **caractérisé en ce que** les creux sont réalisés avec une symétrie de révolution, par perçage, dans une surface plane (17) en retrait par rapport à la surface de pièce voisine et présentent en coupe transversale une partie (21) qui va en diminuant vers le fond (22) des creux.

6. Instrument chirurgical selon la revendication 5, **caractérisé en ce que** les creux présentent une partie tronconique ou conique.

7. Instrument chirurgical selon la revendication 5 ou 6, **caractérisé en ce que** la partie effilée (21) coupe la surface plane (17).

8. Instrument chirurgical selon l'une des revendications 5 à 7, **caractérisé en ce que** la partie effilée (21) présente un angle de cône (α) de 80° à 120°.

9. Instrument chirurgical selon l'une des revendications 5 à 8, **caractérisé en ce que** les creux (4) prévus dans le plan de la surface plane (17) présentent un diamètre (e) de moins de 0,15 mm et un espacement (c, d) entre leurs centres de moins de 0,2 mm.

10. Instrument chirurgical selon l'une des revendications 5 à 9, **caractérisé en ce que** la distance (g) entre le fond (22) du creux et le plan de la surface plane (17) est de moins de 0,05 mm.

11. Procédé pour lire sur un instrument chirurgical un support de données qui est lisible par machine grâce à une détection optique, qui est conçu comme un code à matrice à deux dimensions (5) sous la forme de creux individuels (4) dans une zone de données (3) et qui est fabriqué suivant un procédé selon l'une des revendications 1 à 4, **caractérisé en ce que** la tête de lecture d'une caméra est dirigée avec son axe optique vers le support de données (1) ou vers la surface plane (17), l'éclairage par un rayon lumineux se faisant par l'intermédiaire de l'objectif de la tête de lecture dans l'axe optique.

12. Utilisation d'instruments chirurgicaux pourvus d'un support de données qui est lisible par machine grâce à une détection optique, qui est conçu comme un code à matrice à deux dimensions (5) sous la forme de creux individuels (4) dans une zone de données (3) et qui est fabriqué suivant un procédé selon l'une des revendications 1 à 4, dans un procédé de surveillance selon lequel on associe à chaque instrument un support de données unique pour celui-ci, qui contient des données fixes caractéristiques de l'instrument,
- selon laquelle les données fixes sont enregistrées dans un ordinateur (33),
- à chaque utilisation de l'instrument, le support de données est lu et les données fixes enregistrées, complétées par des données propres à l'utilisation, sont à nouveau mises en mémoire conjointement comme données réelles dans l'ordinateur,
- l'ordinateur compare les données réelles mises en mémoire avec les données théoriques également mises en mémoire
- et généré, sur la base de paramètres prédéfinis, une visualisation de l'état de l'instrument chirurgical.
